# EUROPEAN PATENT SPECIFICATION

(11) **EP 3 488 482 B1**
(45) Date of publication and mention of the grant of the patent: **05.05.2021**
(21) Application number: 17831777.2
(22) Date of filing: 19.07.2017
(51) Int. Cl.: H01M 8/1226, H01M 8/126, H01M 8/1253, H01M 4/88, H01M 4/90, H01M 4/86, H01M 8/0637, H01M 8/1213, H01M 8/1231, H01M 8/124

(54) **INTERMEDIATE-TEMPERATURE FUEL CELL TAILORED FOR EFFICIENT UTILIZATION OF METHANE**
AUF EINE EFFIZIENTE NUTZUNG VON METHAN ZUGESCHNITTENE ZWISCHENTEMPERATUR-BRENNSTOFFZELLE
PILE À COMBUSTIBLE À TEMPÉRATURE INTERMÉDIAIRE ADAPTÉE POUR UNE UTILISATION EFFICACE DU MÉTHANE

(30) Priority: 19.07.2016 US 201662364102 P
(43) Date of publication of application: 29.05.2019
(73) Proprietor: Georgia Tech Research Corporation, Atlanta, Georgia 30332 (US); The University of Kansas, Lawrence, KS 66045 (US)
(72) Inventor: LIU, Meilin, Atlanta Georgia 30332 (US); CHANG, Ik Whang, Atlanta Georgia 30332 (US); CHEN, Yu, Atlanta Georgia 30332 (US); DEGLEE, Ben M., Atlanta Georgia 30332 (US); DOYLE, Brian, Atlanta Georgia 30332 (US); TAO, Franklin, Lawrence Kansas 66045 (US); ZHANG, Lei, Atlanta Georgia 30332 (US)
(74) Representative: Jones, David Alan
(86) International application number: PCT/US2017/042829
(87) International publication number: WO 2018/017698

(56) References cited:
- EP-A1- 2 030 673
- WO-A1-2015/150503
- CN-A- 102 664 271
- US-A1- 2003 118 879
- US-A1- 2004 018 298
- US-A1- 2006 188 760
- US-A1- 2008 038 592
- US-A1- 2009 023 050
- US-A1- 2009 220 829
- US-A1- 2011 081 596
- US-A1- 2012 107 683
- US-A1- 2013 011 768
- US-A1- 2013 052 562
- US-A1- 2013 196 247
- US-A1- 2013 209 904
- US-A1- 2013 273 456
- US-A1- 2014 227 624
- US-A1- 2015 099 212
- HIBINO, T ET AL.: 'Ru-catalyzed anode materials for direct hydrocarbon SOFCs' ELECTROCHIMICA ACTA, [Online] vol. 48, no. 17, 15 July 2003, XP004431906 Retrieved from the Internet: <URL:http://www.sciencedirect.com/science/a rticle/pii/S0013468603002962>

## Description

### BACKGROUND

### 1. Field of the Invention

The present invention relates generally to solid oxide fuel cells, and more particularly to materials and structures utilized to improve intermediate temperature (∼200°C to ∼500°C) operation of the anode, electrolyte, and cathode layers of solid oxide fuel cells fueled directly by a hydrocarbon fuel source.

### 2. Description of Related Art

The demand for clean, secure, and economically competitive energy has stimulated interest in fuel cells for efficient energy conversion. Among all types of fuel cells, solid oxide fuel cells (SOFCs) are the cleanest, most efficient chemical-to-electrical energy conversion systems with excellent fuel flexibility. However, broad commercialization of SOFC technology remains hampered by relatively high cost and limited system lifetime.

SOFCs are currently cost prohibitive because of the high temperatures (∼1000°C) required to achieve efficient, long term operation. Reducing the operating temperatures of the current SOFC systems to between ∼200°C to ∼500°C could dramatically reduce the cost of the SOFC technology since relatively inexpensive metallic components could be used for interconnects, heat exchangers, manifolding, and other structural components of the SOFC system.

Lowering the operation temperature can also offer quick start-up ability, which in turn can enable their use in applications such as transportable power sources and auxiliary power units for automobiles.

A lower operating temperature would also ensure a greater overall system stability and durability due to a reduction in the thermal stresses in the active ceramic structures, leading to a longer expected lifetime for the SOFC system.

Unfortunately, lowering the operating temperature decreases performance at each of the three main components of the SOFC: the anode, the electrolyte, and the cathode.

SOFCs can be fueled by hydrogen or hydrocarbons. Hydrogen that is used to fuel SOFCs can be generated by an external hydrocarbon reforming system, resulting in a loss of fuel value during this process. Eliminating the external hydrocarbon reforming system that generates hydrogen and directly utilizing hydrocarbon fuels could increase SOFC efficiency while decreasing the complexity and cost of the SOFC system. However, technological challenges still remain in creating an SOFC capable of utilizing hydrocarbons, particularly at intermediate temperatures.

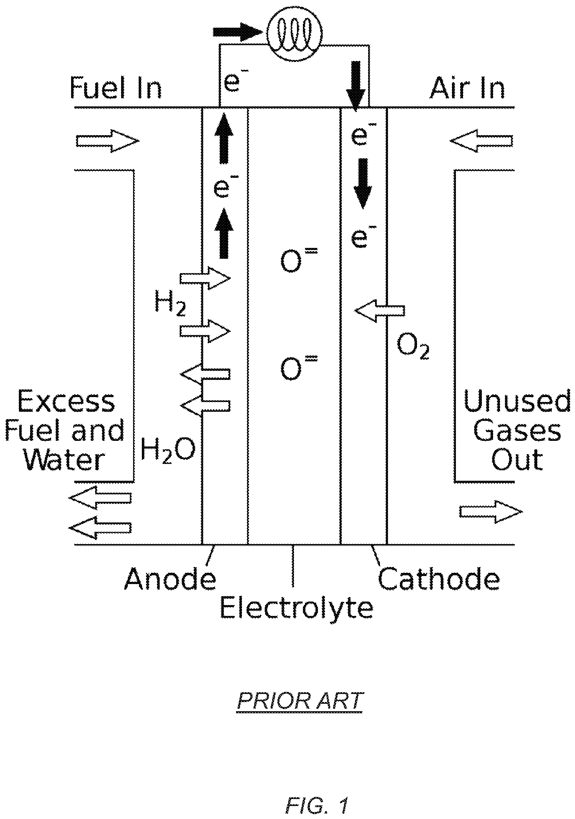

For reference, the functionality and cross section of a single, basic SOFC representative of technology in related art is illustrated in **Fig. 1****.** Single SOFCs are typically connected together electrically in series or parallel to form an SOFC stack.

The anode in related art SOFCs typically serves to oxidize fuel using oxygen ions that have transported through the electrolyte, conduct electrons to the load following the oxidation reaction, and provide structural support for the fuel cell. The anode of an SOFC is typically porous (allowing the flow of fuel to the electrode), conductive (to transport electrons), and includes an oxygen-conducting phase (such as ceria oxide).

SOFC fuel cells fueled by hydrogen can utilize for example nickel yttria-stabilized zirconia (Ni-YSZ) cermets as an inexpensive, stable anode material. Unfortunately, such Ni-based anodes deactivate rapidly with direct utilization of hydrocarbon fuels to due carbon deposition on the Ni catalyst surface, and are therefore not a viable anode material for an SOFC fueled directly by hydrocarbons. Related art SOFCs directly utilizing hydrocarbon fuel can utilize catalysts in the anode to promote reforming reactions, thereby reducing carbon deposition in the anode; however reforming reactions are not favored at intermediate temperatures

Document US 2013/052562 A discloses for example a composite anode having an anode support layer (ASL) of Ni-YSZ and an anode functional layer (AFL) of Ni-GDC. The anode includes a second AFL of GDC disposed between the Ni-GDC and the GDC electrolyte.

The electrolyte used in related art SOFCs is typically composed of a dense layer of ceramic that conducts oxygen ions but has low electron conductivity. Popular electrolyte materials include yttria-stabilized zirconia (YSZ), Scandia stabilized zirconia (ScSZ), and gadolinium doped ceria (GDC). However, at operating temperatures below 600°C, the electrolyte develops increased resistance to ionic transport, thereby affecting the overall performance of the fuel cell. Consequently, GDC or samaria-doped ceria (SDC) that has a higher conductivity of ions have been used as the electrolyte for operation in the intermediate temperature range; however, these materials can also allow electrons to traverse the electrolyte, resulting in unwanted leakage current and thereby hampering SOFC device performance

Document US 2013/011768 A1 for example discloses an anode supported SOFC comprising a Ni-SDC anode layer, a LSCF cathode layer, a SDC electrolyte layer, and an interlayer between the cathode layer and the electrolyte layer, a SDC or BZY, which cannot be interpreted as second electrolyte layer and is not specified as proton conductor. Document US 2014/227624 A1 discloses a SOFC comprising a SSZ/ SDC bi-layer electrolyte, a NiO-YSZ anode substrate from a mixed NiO and yttria-stabilized zirconia and a NiO-SSZ anode buffer layer, and a porous SSC-SDC cathode. The SOFC can directly utilise hydrocarbon fuel.

The cathode in related art SOFCs is typically a thin, porous, electrically conductive layer deposited on the electrolyte that serves to conduct electrons to the incoming oxygen and reduce the oxygen. Because the oxygen reduction reaction requires greater energy at lower temperatures, typical cathode materials become unable to efficiently reduce oxygen at lower temperatures, thereby affecting the overall performance of the fuel cell.

In view of the above, a need exists for improved technologies in the anode, electrode, and cathode layers of SOFCs in order to develop a high performance intermediate temperature direct-hydrocarbon SOFC.

It is thus an intention of the present invention to implement inventive technologies improving the anode, electrolyte, and cathode that improves performance at intermediate temperatures (as used herein, ∼200°C to ∼500°C) using methane, which is a more energy dense and less energy-intensive fuel as compared to hydrogen, and already has a large installed infrastructure to draw upon. As the anode does the methane processing, another aspect of the present invention is to improve it for both hydrocarbon processing and low temperature. The electrolyte and cathode layer technologies are re-imagined to address the lower temperature challenges.

### SUMMARY

Briefly described, in an exemplary form, the present invention is an innovative approach to the fuel cell, wherein improved technologies are incorporated into the anode, electrolyte, and cathode to provide optimal performance at intermediate temperatures using methane.

On the anode, an optimized doped ceria catalyst has been developed that is active for wet and dry reforming of methane below approximately 500°C. The anode has coking stability of the catalyst after 200+ hours of testing in 97% methane with 3% water. It can operate on such a low water content by optimizing the phases on the surface of the anode. For example, the fuel cell of the present invention can operate at 200 mA/cm² at 0.75 V without deactivation.

For the electrolyte, a synergistic effect was found when two different ionic conductors are processed to increase the number of interfaces. Increasing the density of these interfaces increases the ionic conductivity to a value greater than either individual component. Additionally, an increase in ionic conductivity for nanostructured electrolytes was observed that can further enhance overall cell performance.

On the cathode, a high performance transition metal oxide catalyst was produced using a scalable electrospinning fiber technique. The dual ionic and electronic conductivity of the material, combined with the high surface area of a hollow nanofiber architecture, allows for increased catalytic activity toward the oxygen reduction reaction.

In another exemplary embodiment, the present invention is a next generation fuel cell with a high oxygen reduction reaction (ORR) kinetic cathode, a highly efficient catalytic active layered anode enabling methane reforming, and direct operation on methane at approximately 500°C. Highly active cathode nanofibers coated with nanoparticles can efficiently enhance ORR kinetics. The rational design of a layered anode comprising a reforming catalyst layer, a modified support layer, and an anode functional layer, shows high coking tolerant and methane reformation rate. A single exemplary cell can yield a peak power density of 0.368 W/cm² at 500°C, and has a long durability of 200 hours, when wet methane (for example, 3 vol % steam) was directly used as fuel and ambient air as oxidant.

The present invention is an intermediate-temperature fuel cell comprising an anode comprising a doped ceria catalyst, an electrolyte, and a cathode, wherein the fuel cell is configured to directly utilize hydrocarbon fuel at temperatures of 500°C or less.

The anode can comprises an anode functional layer (AFL), an anode support layer (ASL), and an anode reforming layer (ARL).

The AFL and ASL layers can comprise Ni-based material. The AFL and ASL layers can comprise Ni-BaZr_{0.1}Ce_{0.7}Y_{0.1}Yb_{0.1}O_{3-δ}.

The ARL layer can comprises the doped ceria catalyst.

The ASL layer can be impregnated with samaria-doped ceria (SDC).

The AFL and ASL layers can a pore structure, wherein the AFL layer has a finer pore structure than the ASL layer.

The doped ceria catalyst comprises Ni and Ru doped ceria. The doped ceria catalyst can comprises Ni and Ru supported ceria. The doped ceria catalyst can comprises Ni and Ru doped ceria and Ni and Ru supported ceria.

At least a portion of the dopants can be ions dispersed on a surface of the ceria.

The doped ceria comprises nanofibers.

The sum of Ni and Ru by weight can be approximately 10 % or less. The Ni can present at approximately 5 % by weight of the ARL. The Ru can be present at approximately 5 % by weight of the ARL.

The doped ceria can include an oxygen vacancy near one of the Ni or Ru dopants dispersed as ions on the surface of the ceria. The oxygen vacancy can play an active role in a methane reforming reaction.

The electrolyte can comprises an oxygen ion transporting solid oxide fuel cell (SOFC) electrolyte material, and a proton transporting SOFC electrolyte material. The oxygen ion transporting SOFC electrolyte material comprises samaria-doped ceria. The proton transporting SOFC electrolyte material can comprises barium yttrium zirconate.

The ratio of oxygen ion transporting SOFC electrolyte material to proton transporting SOFC electrolyte material is approximately 1:10.

The electrolyte comprises alternating layers of the oxygen ion transporting SOFC electrolyte material and the proton transporting SOFC electrolyte material.

Grain boundaries between the oxygen ion transporting SOFC electrolyte material and the proton transporting SOFC electrolyte material can be substantially vertical.

The cathode comprises hollow oxide nanofibers. The nanofibers can have an average outer diameter between 200 nm and 400 nm and an average inner diameter between 50 nm and 150 nm.

The nanofibers can comprise one or more materials selected from the group consisting of PrBa_{0.5}Sr_{0.5}Co_{1.5}Fe_{0.5}O_{5+δ}, La_{0.6}Sr_{0.4}Co_{0.2}Fe_{0.8}O₃, PrBa_{0.5}Sr_{0.5}Co₂O₆, and Sm_{0.5}Sr_{0.5}CoO₃.

Nanoparticles can reside on an outer surface of the hollow oxide nanofibers.

The nanoparticles can comprise one or more materials selected from the group consisting of PrOₓ, samaria-doped ceria (SDC), gadolinia-doped ceria (GDC), and Pr_{0.1}Ce_{0.9}O₂, Pf₂Ni_{0.5}Mn_{0.5}O₄.

The cathode can be formed by the process of electrospinning an oxide material, calcining the electrospun oxide material, resulting in a mat of hollow oxide nanofibers, flooding the mat of hollow oxide nanofibers with a mixture containing a binder and a solvent, drying the mat of hollow oxide nanofibers, and bonding the mat of hollow oxide nanofibers to an electrolyte layer.

The fuel cell of any exemplary embodiment of the present invention can be configured to directly utilize hydrocarbon fuel while operating with a current density of at least 200 mA/cm² and an open circuit voltage of 0.75 V at temperatures of 500°C or less for two hours or more without deactivation.

The fuel cell of any exemplary embodiment of the present invention can be configured to directly utilize hydrocarbon fuel and yield a peak power density of 0.368 W/cm² at temperatures of 500°C or less.

In another exemplary embodiment, the present invention is a intermediate-temperature fuel cell comprising an anode comprising an anode functional layer (AFL), an anode support layer (ASL), and an anode reforming layer (ARL) comprising a doped ceria catalyst selected from the group consisting of Ni and Ru doped ceria, Ni and Ru supported ceria, and both of Ni and Ru doped ceria and Ni and Ru supported ceria, a composite material electrolyte comprising an oxygen ion transporting solid oxide fuel cell (SOFC) electrolyte material, and a proton transporting SOFC electrolyte material, and a cathode comprising hollow oxide nanofibers, wherein the fuel cell is configured to directly utilize hydrocarbon fuel at temperatures of 500°C or less.

In another exemplary embodiment, the present invention is a intermediate-temperature fuel cell comprising an anode comprising a doped ceria catalyst that is active for wet and dry reforming of methane below approximately 500°C, a composite material electrolyte comprising an oxygen ion transporting SOFC electrolyte material, and a proton transporting SOFC electrolyte material, and a cathode comprising a hollow nanofiber architecture.

In another exemplary embodiment, the present invention is a solid oxide fuel cell (SOFC) comprising an anode comprising an anode functional layer (AFL), an anode support layer (ASL), and anode reforming layer (ARL), and an electrolyte layer, wherein an electron blocking layer is formed between the AFL and electrolyte layer.

In another exemplary embodiment, the present invention is an anode for a solid oxide fuel cell (SOFC) comprising a doped ceria catalyst that is active for wet and dry reforming of methane below approximately 500°C.

In another exemplary embodiment, the present invention is an electrolyte for an SOFC comprising an oxygen ion transporting SOFC electrolyte material, and a proton transporting SOFC electrolyte material.

In another exemplary embodiment, the present invention is a cathode for an SOFC comprising a hollow nanofiber architecture.

In another exemplary embodiment, the present invention is a method of forming an SOFC comprising forming an anode support layer (ASL), forming an anode functional layer (AFL) on a top of the ASL, forming an electrode layer on a top of the AFL layer, co-firing the ASL, AFL, and electrode layers, forming a cathode layer on a top of the electrode layer, co-firing the ASL, AFL, electrode, and cathode layers, forming an anode reforming layer (ARL) on a bottom of the ASL, and co-firing the ASL, AFL, electrode, cathode, and ARL layers.

The method can further comprise contacting a buffer layer material with a top of the electrode layer, and/or impregnating the ASL layer with Sm_{0.52}CeO_{1.9}.

### BRIEF DESCRIPTION OF THE DRAWINGS

**Fig. 1** illustrates the layers and operation of a single SOFC according to prior art.
**Fig. 2** illustrates certain technologies described in the present disclosure according to some example embodiments.
**Figs. 3(a1), 3(b1), 3(a2), 3(b2), 3(a3),** and **3(b3)** show catalytic performance data of catalysts having varying ratios of ruthenium (Ru) and nickel (Ni) dopants, as a function of temperature.
**Fig. 4** shows a conceptual drawing illustrating ion transport in a mixed-ion conducting membrane electrolyte structure including an oxide ion conductor and a proton conductor according to an example embodiment.
**Fig. 5** shows ion conductivity as a function of temperature for mixed-ion conducting membrane electrolyte structures having various heterostructures according to an example embodiment.
**Figs. 6(a), 6(b), 6(c),** and **6(d)** show cross-sectional images of an example fabricated SOFC showing certain layers of the SOFC structure at increasing magnification according to an example embodiment.
**Figs. 7(a)** and **7(b)** show electrical testing data from hollow nanofiber cathode structures according to an example embodiment compared to nano powder cathode structures.
**Fig. 8** shows data from an example functional SOFC incorporating certain technologies described herein according to an example embodiment.

### DETAILED DESCRIPTION

Examples of an SOFC capable of converting hydrocarbon fuels at temperatures in an intermediate (200°C to 500°C) range are presented. Technologies for improving the operation of the anode, electrode, and cathode fuel cell components are presented. As will be appreciated and understood, improvements described herein can be used together, separately, or combined with other technologies.

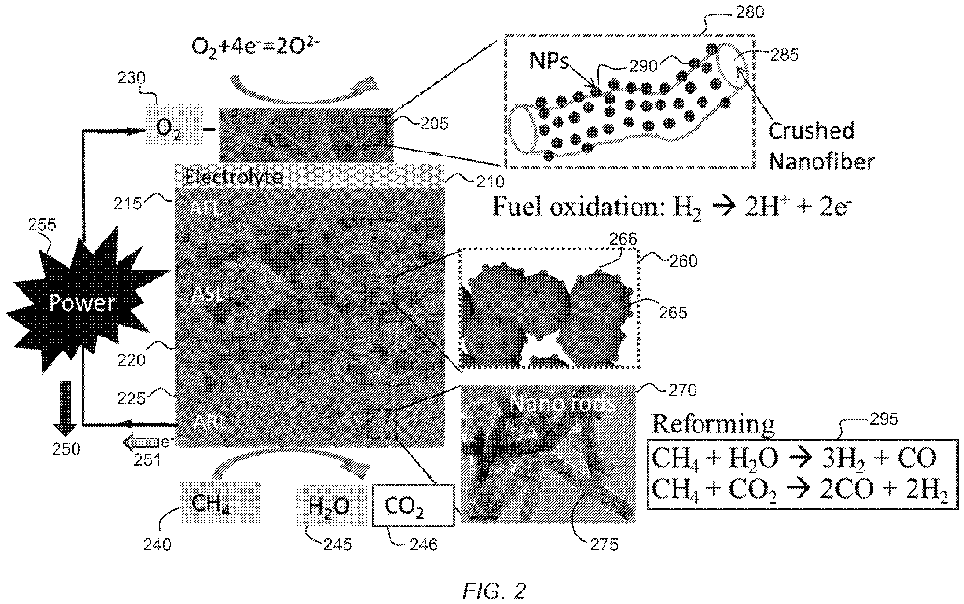

An example SOFC utilizing technologies according to some embodiments is illustrated in **Fig. 2****.** As shown in **Fig. 2****,** an SOFC according to some embodiments can include a three layer anode **225, 220, 215,** an electrolyte layer **210,** and a cathode layer **205.**

Referring to layered structures, such as **Fig. 2****,** a side of a layer that is vertically up as depicted in **Fig. 2** will be referred to herein as a "top side", and a side of a layer that is vertically down as depicted in **Fig. 2** will be referred to herein as a "bottom side". For example, in **Fig. 2****,** a bottom side of an anode reforming layer (ARL) **225** can be exposed to fuel; a top side of the ARL **225** can interface with a bottom side of an anode support layer (ASL) **220;** a top side of the ASL **220** can interface with a bottom side of an anode functional layer (AFL) **215;** the top side of an AFL **215** can interface with a bottom side of an electrolyte layer **210;** a top side of the electrolyte layer **210** can interface with a bottom side of a cathode layer **205;** and a top side of a cathode layer **205** can be exposed to oxygen or an oxygen-air mixture **230.**

Each layer can include technologies to improve the functionality of that layer, the functionality of the interfaces between layers, and the functionality of the SOFC as a whole. As will be appreciated and understood, certain technologies disclosed herein can be incorporated individually, combined with other technologies, or together to create an improved SOFC. The example SOFC illustrated in **Fig. 2** is therefore not intended to limit the scope of the present disclosure, as certain technologies described herein can be utilized with other structures including other SOFC structures or non-SOFC structures.

Each layer is described starting with the bottom, ARL layer and ending with the top, cathode layer. As will be appreciated and understood, the order in which the layers are described does not imply any particular SOFC fabrication order or techniques unless specifically stated herein; nor is the order in which the layers is discussed intended the limit the functionality of the SOFC or the possible applications of the technologies described herein.

### Anode Technologies

As shown in **Fig. 2****,** according to some embodiments, the anode can comprise three layers: ARL **225,** ASL **220,** and AFL **215.** Each of the three layers can serve to improve the overall functionality of the anode and the therefore the functionality of the SOFC. As will be appreciated and understood, certain technologies incorporated into the anode layers can be used individually, combined with other technologies, or used together to create an improved anode structure.

The ARL **225** can have a bottom side configured to be in contact with a hydrogen or hydrocarbon fuel source **240.** The ARL can be composed of porous material including a reforming catalyst that is resistant to carbon deposition, promotes the disassociation of hydrogen from carbon and atoms in hydrocarbon molecules, and promotes the oxidation of carbon atoms. The reforming catalyst can comprise Ce_{0.9}Ni_{0.05}Ru_{0.05}O_{2-δ} (CNR). The bottom side of the ARL can allow hydrocarbon fuel **240,** such as methane, to enter the ARL **225,** and the bottom side of the ARL **225** can allow water **245** and carbon dioxide **246** to exit the ARL **225.**

Carbon reforming reactions **295** can occur in the ARL **225.** Carbon reforming reactions **295** can limit or eliminate carbon deposition in the anode when hydrocarbons are directly used as a fuel source for the SOFC. The carbon reforming reactions **295** can be facilitated by catalysts within the ARL **225.** The catalysts can be in the form of singly ionized dopants or nanoparticles.

Hydrogen and carbon monoxide can exit the ARL **225** and enter the ASL **220** through the interface between the ARL **225** and ASL **220.** Oxygen, water, and carbon dioxide can enter the ARL through the interface between the ARL and ASL. The ARL can be electrically conductive and can be connected to an electrical contact that can be configured to allow the flow of electrons **251** from the ARL **225** to an external electrical load **255.**

The ARL can be composed of nickel (Ni) and ruthenium (Ru) doped ceria or other oxygen-transporting electrolyte. At least some of the Ni and Ru dopants can be ions that are dispersed on the surface of the ceria. The percentage of dopants by weight to the total weight of the doped ceria can be less than 10%.

**Fig. 2** shows a magnified image **270** of ARL **225** material according to some embodiments. As shown in **Fig. 2****,** the ARL **225** can be composed of nanofibers or nanorods **275.** According to some embodiments, the nanorods **275** can be ceria nanorods having Ni and Ru dopants, where at least some of the dopants are singly dispersed ions on the surface of the nanorods **275.** The nanorods may further include oxygen vacancies at sites near the singly dispersed Ni and Ru ions, and these oxygen vacancies may play an active role in the methane reforming process.

The ASL **220** can provide mechanical support for the SOFC structure, can be highly porous to allow for the flow of gas, and can include catalysts for promoting oxidation of carbon monoxide and hydrogen. The ASL **220** can be created through typecasting, or other known process

**Fig. 2** shows a magnified drawing **260** of the porous material **265** of the ASL **220** with nanoparticles **266** on the surface of the porous material **265.** The porous material **265** can be Ni-BaZr_{0.1}Ce_{0.7}Y_{0.1}Yb_{0.1}O_{3-δ} (Ni-BZCYYb), other nickel based material, or other suitable material. The porous material **265** can be impregnated with samaria-doped ceria (SDC), for example Sm_{0.52}CeO_{1.9}, or other coking tolerant material. As shown in **Fig. 2****,** SDC can reside on the surface of the porous material **265** as nanoparticles **266.**

The ASL **220** can transport ionized oxygen from the interface with the AFL **215** at the top side of the ASL **220** to the interface with the ARL **225** at the bottom side of the ASL **220.** The ASL **220** can transport water from the interface with the AFL **215** at the top side of the ASL **220** to the interface with the AFL **215** at the bottom side of the ASL **220.** The ASL **220** can allow the flow of hydrogen into the AFL **215.** Ionized oxygen entering the ASL **220** can react with carbon monoxide to generate carbon dioxide and conduction electrons. The ASL **220** can be electrically conductive and can be connected to an electrical contact that can be configured to allow the flow of electrons **251** from the ASL **220** to an external electrical load **255.**

The AFL **215** can be deposited on the top side of the ASL **220,** and can be composed of the same material as the ASL **220.** The AFL **215** can be impregnated with SDC or other oxygen-transporting electrolyte.

The AFL **215** can have finer pores compared to the ASL **220,** providing greater surface area (compared to the ASL) to promote the ionization of hydrogen. The AFL **215** can also promote the oxidation of ionized hydrogen to form water. The AFL **215** can have an enlarged triple phase (pore phase, electron-conducting phase, and ion-conducting phase) boundary (TPB).

Example SOFCs having the three layer anode structure depicted in **Fig. 2** were fabricated using certain technologies described above. The depictions of the ARL **225,** ASL **220,** and AFL **215** in **Fig. 2** include cross-sectional images of each anode layer of a fabricated example SOFC. The images of the anode layers shown in **Fig. 2** were generated using a scanning electron microscope (SEM). The SEM images of the anode layers shown in Fig. 2 are for illustrative purposes, and no attempt was made to scale the image for a given layer in relation to an image of any other layer.

The ASL **220** and AFL **215** layers of some of the example SOFCs are composed of Ni-BZCYYb with the AFL **215** being a fine functional Ni-ZYCYYB layer having enlarged TPB. After deposition of the AFL **215** on the ASL **220** but before deposition of the ARL **225,** SDC is infused into the ASL **220** and AFL **215** layers through the bottom side of the ASL **220.** The ARL **225** layer of some of the example SOFCs is composed of ceria nanorods **275;** however, as will be appreciated and understood, alternative structures such as nanocubes, and alternative materials could be used in the ARL. The ARL **225** of some of the example SOFCs is ceria doped with Ni and Ru, resulting in at least some of the Ni and Ru residing as singly dispersed ions on the surface of the ceria nanorods.

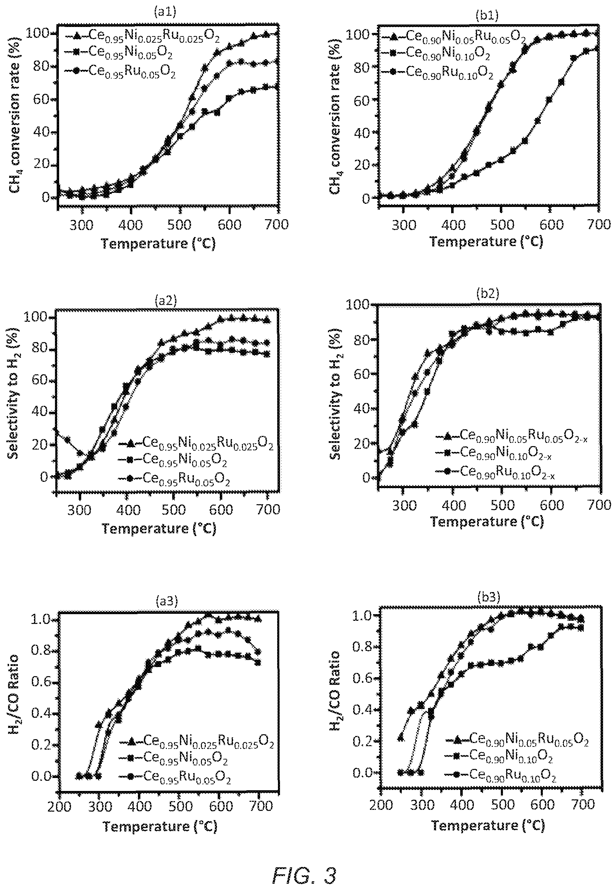

For the purposes of example and without limiting the scope of the disclosure, the effectiveness of ceria powder doped with various ratios of Ni and Ru at reforming carbon was tested with results provided in **TABLE 1** and **Fig. 3(a1), 3(b1), 3(a2), 3(b2), 3(a3),** and **3(b3)****.** Tests were performed with a dry reforming gas ratio of 1CH₄:1CO₂.

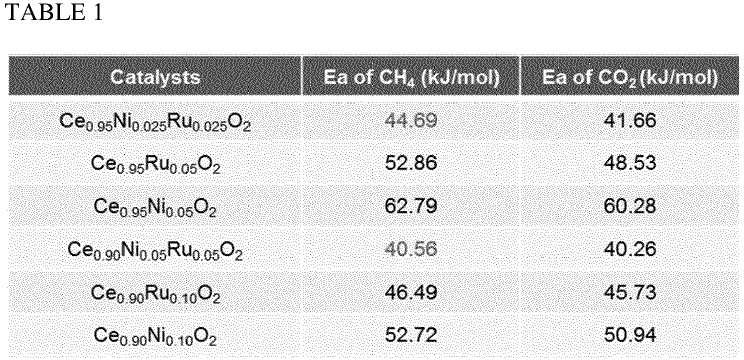

Results suggest that small amounts (less than 10%) of Ru or Ni dopants to CeO₂ can dramatically increase the occurrence of reforming reactions **295** in the ARL **225;** and the combination of Ru and Ni can increase the occurrence of reforming reactions **295** in the ARL **225** compared to the corresponding amount of a single dopant. For the example fabricated SOFCs tested, results suggest an ARL **225** composed of 5% Ru, 5% Ni, and 90% Ce by weight can optimize reforming activity in the ARL **225** at intermediate temperatures. Similar tests were performed with a steam reforming gas ratio of 2CH₄:3H₂O. Results from steam reforming tests also suggest the combination of Ru and Ni can increase the occurrence of reforming reactions **295** in the ARL **225.**

### Electrolyte Technologies

Referring to **Fig. 2****,** an electrolyte layer **210** can be deposited on the top side of the anode layers. The bottom side of the electrolyte layer can interface with the top side of the AFL **215.** The electrolyte layer can be a dense ceramic layer that can be a single ceramic material or a composite ceramic. The electrolyte layer can be a composed of an oxide ion conductor, a proton conductor, or a composite of an oxide ion conductor and a proton conductor.

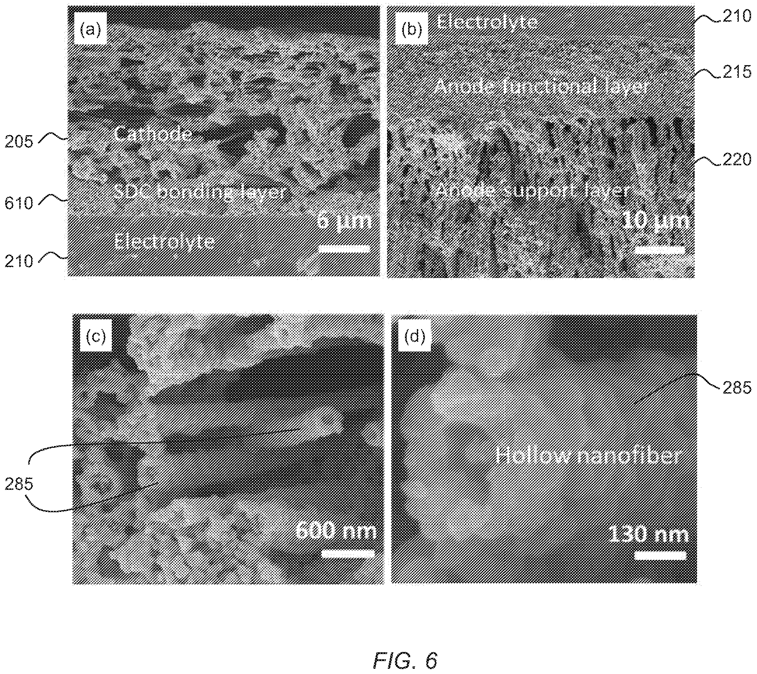

**Fig. 6(b)** shows an example fabricated SOFC having a dense electrolyte layer **210** on an AFL **215** having a fine pore structure on an ASL **220** having a coarse pore structure according to an example embodiment.

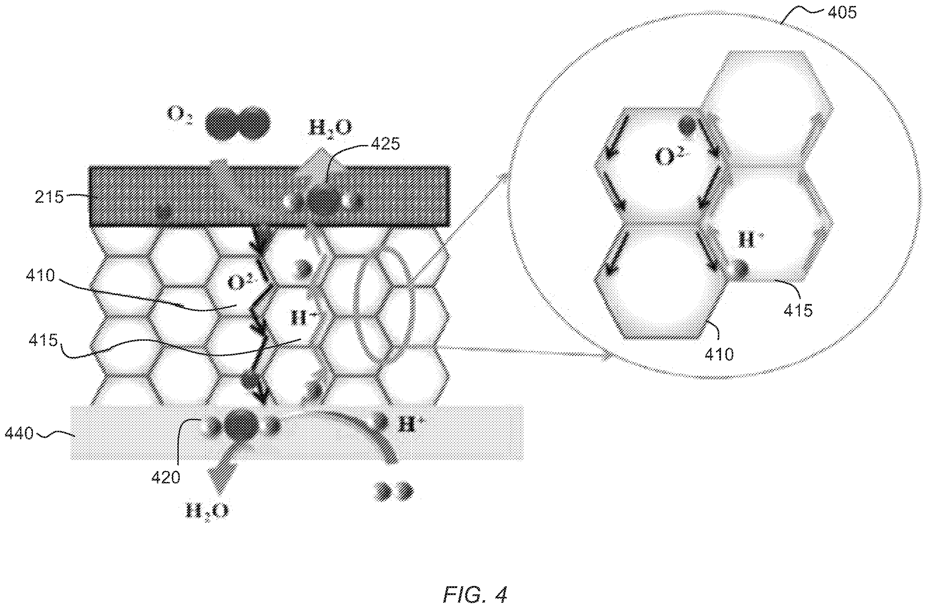

Returning to **Fig. 4****,** it shows a conceptual drawing illustrating ion transport in a mixed-ion conducting membrane electrolyte structure including an oxide ion conductor and a proton conductor according to an example embodiment. As illustrated in **Fig. 4****,** the electrolyte can be composed of alternating layers of oxide ion conductor **410** and proton conductor **415** electrolyte material. A magnified conceptual drawing **405** in **Fig. 4** illustrates the direction of travel of oxygen ions and protons. As shown, the cathode layer **205** can serve to ionize oxygen for transport through the oxide ion conductor **410** to the anode **440,** where the oxygen ions can react with hydrogen to form water **420.** At the same time, hydrogen can be ionized in the anode layer **440,** transported through the proton conductor **415** and react with oxygen to form water **425.** The electrolyte layer can be a composite of SDC and barium yttrium zirconate BaZr_{0.85}Y_{0.15}O_{3-δ} (BZY15), a proton-transporting eletrolyte composite having vertical grain boundaries.

Utilization of an electrolyte containing an oxide ion conductor **410** allows oxygen to be transported from a cathode layer to an anode layer in an SOFC. The oxygen in the anode is necessary for reforming reactions in order to reduce or prevent carbon deposition in the anode when utilizing a direct hydrocarbon fuel source.

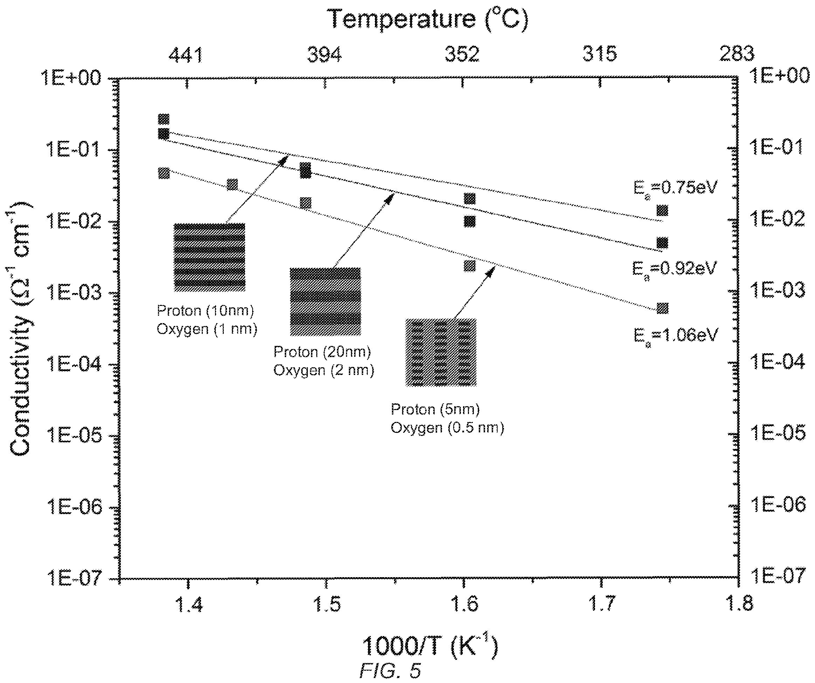

The interfaces between oxide ion conductor **410** and proton conductor **415** in the electrolyte can be tailored to achieve optimal SOFC performance. **Fig. 5** provides data indicating ion conductivity as a function of temperature for mixed-ion conducting membrane electrolyte structures having various heterostructures according to an example embodiment. Of the heterostructures tested, those having alternating 10 nm proton conductor **415** layers and 1 nm oxygen ion conductor **410** layers showed the best performance (highest ion conductivity). Heterostructures with 5 nm proton conductor layers/0.5 nm oxygen ion conductor layers and heterostructures with 20 nm proton conductor layers/2 nm oxygen ion conductor layers were also tested resulting in data shown in **Fig. 5****.**

### Cathode Technologies

Referring back to **Fig. 2****,** a cathode layer **205** can be deposited on a top side of an electrolyte layer **210.** The cathode layer **205** in **Fig. 2** is depicted with a magnified image showing a nanofiber structure. A magnified conceptual illustration **280** depicts a nanofiber **285** with nanoparticles **290** attached to the surface of the nanofiber **285.**

**Figs. 6(a), 6(b), 6(c),** and **6(d)** show cross-sectional images of an example fabricated SOFC showing certain layers of the SOFC structure at increasing magnification according to an example embodiment. According to an example embodiment, the cathode layer **205** can be separated from the electrolyte layer **210** by a SDC bonding layer **610.** The SDC bonding layer can serve to prevent the cathode and electrolyte layer from reacting and forming an insulating layer. Although the example embodiments depict the SDC bonding layer **610** as composed of SDC, other suitable materials can be used.

**Figs. 6(c)** and **6(d)** show magnified images of hollow nanofiber structures **285** in the cathode layer **205** of an example fabricated SOFC. The nanofibers **285** can be composed of PrBa_{0.5}Sr_{0.5}Co_{1.5}Fe_{0.5}O_{5+δ} (PBSF) or other suitable material (such as La_{0.6}Sr_{0.4}Co_{0.2}Fe_{0.8}O₃, PrBa_{0.5}Sr_{0.5}Co₂O₆, Sm_{0.5}Sr_{0.5}CoO₃, etc.) infiltrated with nano-PrOₓ or other oxygen reducing catalyst (such as SDC, GDC, Pr_{0.1}Ce_{0.9}O₂, Pr₂Ni_{0.5}Mn_{0.5}O₄, etc.).

For the purpose of example and without limiting the scope of the disclosure, hollow nanofibers of PrBa_{0.5}Sr_{0.5}Co₂O_{5+δ} (PBSC), created by an electrospinning process, are assembled into a three dimensional (3D) fibrous porous electrode, providing facile pathways for gas transport and excellent electrical conductivity for efficient charge transfer and, thus greatly enhancing the rate of oxygen reduction reactions (ORR), as confirmed by electrical testing that demonstrates the small electrode polarization resistance and low activation energy of fabricated example hollow nanofiber cathodes.

Example hollow nanofiber cathodes were manufactured by first electrospinning a PBSC precursor solution then calcining in air at 950°C for two hours with a ramping rate of 2°C/min resulting in hollow PBSC fibers composed of nanosized grains of PBSC, the grains having diameters of approximately 20 to 100 nm. Second, the PBSC nanofiber mat was flooded with a polyvinyl butyral (PVB)/ethanol solution (a common binder/solvent for commercial tape-casting) then dried at 25°C for two hours, removing the ethanol, resulting in a strong and flexible fiber mat. Third, coupons were punched from the nanofiber mat and bonded to the top of a GDC electrolyte membrane using a SDC slurry and co-fired at 950°C for two hours. Referring back to **Fig. 6(c)** and **Fig. 6(d)****,** the resulting hollow nanofibers **285** in the example hollow nanofiber cathodes had an inner diameter of approximately 100 nm and an outer diameter of approximately 300 nm and lengths substantially longer than the outer diameter.

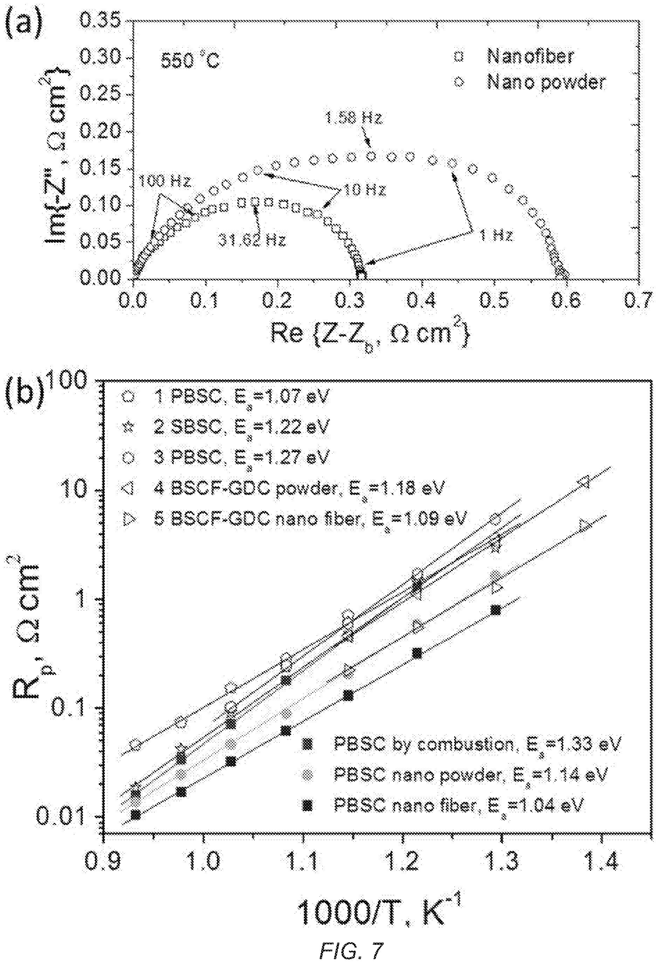

**Fig. 7(a)** and **Fig. 7(b)** show electrical testing data from the fabricated example hollow nanofiber cathodes. For comparison, a paste of PBSC nanopowder composed of crushed PBSC fibers and a binder (V006) was also prepared and painted on SDC pellets. **Fig. 7(a)** shows typical impedance spectra of cathodes based on PBSC hollow nanofiber (square) and nanopowder (crushed fiber) (circle) measured at 550°C under open circuit conditions. **Fig. 7(b)** shows a comparison of polarization resistance (Rₚ) and apparent activation energy (Ea) for PBSC hollow nanofiber (black solid square), PBSC nanopowder (light grey circle), PBSC prepared by combustion (grey square), PBSC derivatives or fibers cathode reported by others: 1 PBSC [J. H. Kim, M. Cassidy, J. T. S. Irvine, J. Bae, J. Electrochem. Soc. 156 (2009) B682-B689] (pentagon), 2 SBSC [i.d.], 3 PBSC [H. Ding , X. Xue, Electrochim. Acta 55 (2010) 3812-3816] (star), 4 BSCF-GDC powder [J. G. Lee, J. H. Park, Y. G. Shul, Nat. Commun. 5 (2014)] (left pointing triangle), and BSCF-GDC core-shell fiber [i.d.] (right pointing triangle). Example fabricated hollow nanofiber cathodes show much lower area specific resistance compared to cathodes based on nanopowder.

### SOFC Manufacturing Process

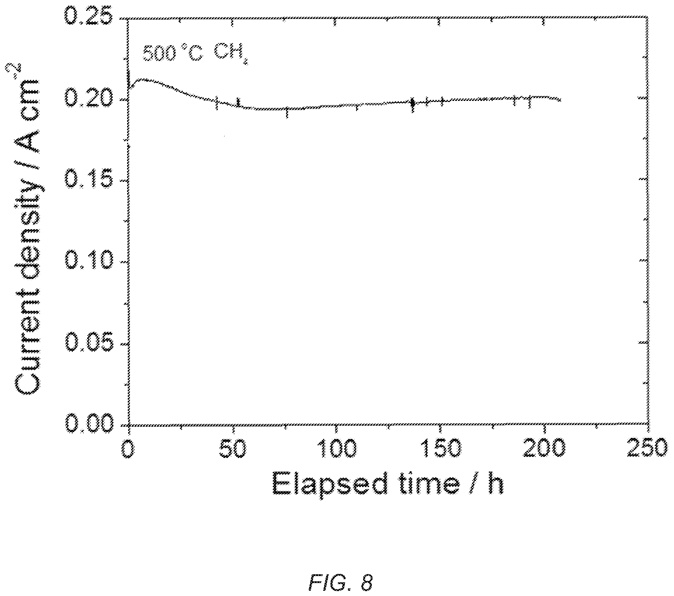

Example SOFCs were manufactured using the following steps resulting in a functional SOFC capable of utilizing a direct hydrocarbon fuel source at a temperature of 500°C at 0.7 V on 97% methane and 3% water. Functional SOFCs resulting from the described process demonstrate the proof of concept with 200 hours of operation of the functional SOFCs as presented in **Fig. 8****.** Functional SOFCs representative of the data presented in **Fig. 8** have a layered structure similar to that illustrated in **Fig. 2****.** The described functional SOFCs developed through the described manufacturing process are not intended to limit possible structures that can utilize technologies described in this disclosure.

1. Create anode support layer (ASL). Functional SOFCs presented herein are manufactured through typecasing; however other known processes could be utilized. The ASL of functional SOFCs is composed of highly porous Ni-BZCYYb, although other suitable materials could be utilized.

2. Create anode functional layer (AFL). The AFL is created by refined slurry coating process; however other processes could be utilized. The AFL of functional SOFCs are composed of Ni-BZCYYb, however other suitable materials could be utilized. The AFL has finer pores compared to the ASL, providing greater surface area compared to the ASL, and promoting ionization of hydrogen.

During SOFC development, the combination of an ASL and an AFL composed of Ni-BZCYYb together with an electrolyte composed of SDC was shown to result in a better performing direct-hydrocarbon, intermediate temperature SOFC. It is hypothesized that Ni-BZCYYb and SDC at the interface between the AFL and electrolyte layer form an electron blocking layer, thereby reducing unwanted electron leakage current through the electrolyte layer.

3. Create an electrolyte layer. The electrolyte layer of function SOFCs is created by refined slurry coating process; however other processes could be utilized. Various functional SOFCs having differing electrolyte structures containing SDC and BZY15 were manufactured. The composite could be made of an oxygen transporter other than SDC, and a proton transporter other than BZY15. Data presented in **Fig. 8** illustrates results from a functional SOFC having an electrolyte composed of SDC without a proton transporter.

4. Co-fire the stack presented that includes the ASL, AFL, and electrolyte. Functional SOFCs representative of the data presented in **Fig. 8** are co-fired at 1400°C for five hours.

5. Create an SDC bonding layer at the electrolyte interface. The SDC layer is created by refined slurry coating. The resulting SDC bonding layer in functional SOFCs is between approximately 3 to 4 µm thick.

6. Create a cathode layer at the SDC bonding layer interface. The cathode layer in a functional SOFC representative of the data presented in **Fig. 8** is painted on the SDC bonding layer. The cathode layer is composed of electrospun hollow oxide PBSCF nanofibers (300 nm) mixed with PrOₓ nanoparticles by solution infiltration, where the mass ratio of fiber and PrOₓ is approximately 1:1. Other suitable materials could be utilized to form hollow nanofibers with nanoparticle catalysts, and other ratios of fiber to nanoparticle could be utilized.

7. Co-fire the stack including the ASL, AFL, electrolyte, SDC bonding layer, and cathode. Functional SOFCs representative of the data presented in **Fig. 8** are co-fired at between 1050°C and 1080°C for two hours.

8. Impregnate ASL with SDC. The SDC serves to promote catalysts and can be effecting at promoting methane reforming, conversion of CO into CO₂ (water-gas shift), and ionization of hydrogen. Other suitable materials can also be utilized in place or in addition to SDC. Through the impregnation process, SDC can also impregnate the AFL. SDC impregnation can also be performed following the co-firing of the ASL, AFL, and electrolyte layer, i.e. at some point after step 4, but before step 9.

9. Create anode reforming layer (ARL). The ARL of functional SOFCs representative of the data presented in **Fig. 8** are created by slurry coating. The ARL comprises ceria nanorods with Ru and Ni dopants. The Ru and Ni dopants exist as both dispersed ions on the surface of the ceria nanorods and as nanoparticles.

10. Co-fire completed stack comprising ARL, ASL, AFL, electrolyte, SDC bonding layer, and cathode layer. Functional SOFCs representative of the data presented in **Fig. 8** are co-fired at 800°C for two hours.

## Claims

1. A fuel cell configured to directly utilize hydrocarbon fuel at temperatures of 500°C or less comprising:
a layered anode comprising an Ni and Ru doped ceria catalyst, the anode being active for wet and dry reforming of the hydrocarbon fuel below 500°C;
a mixed-ion conducting membrane electrolyte structure comprising alternating layers of:
an oxygen ion transporting solid oxide fuel cell (SOFC) electrolyte material comprising samaria-doped ceria,; and
a proton transporting SOFC electrolyte material comprising barium yttrium zirconate; and
a cathode configured to ionize oxygen for transport through the oxygen ion transporting SOFC electrolyte material to the layered anode;
wherein the oxygen ion transporting SOFC electrolyte material is configured to transport therethrough the ionized oxygen from the cathode to the layered anode;
wherein the proton transporting SOFC electrolyte material is configured to transport therethrough hydrogen ionized from the layered anode to the cathode; and
wherein the ratio of the oxygen ion transporting SOFC electrolyte material to the proton transporting SOFC electrolyte material is approximately 1:10.

2. The fuel cell of Claim 1, wherein the layered anode comprises:
an anode functional layer (AFL);
an anode support layer (ASL); and
anode reforming layer (ARL).

3. The fuel cell of Claim 2, wherein the AFL and ASL layers comprise Ni-based material.

4. The fuel cell of Claims 2 or 3, wherein the ARL layer comprises the doped ceria catalyst; or
wherein the ASL layer is impregnated with samaria-doped ceria (SDC).

5. The fuel cell of any one of Claims 2 to 4, wherein the AFL and ASL layers have a pore structure; and
wherein the AFL layer has a finer pore structure than the ASL layer.

6. The fuel cell of Claim 1, wherein the cathode
comprises hollow oxide nanofibers.

7. The fuel cell of Claim 2, wherein the sum of Ni and Ru by weight is approximately 10 % or less; and/or
wherein Ni is present at approximately 5 % by weight of the ARL; and/or
wherein Ru is present at approximately 5 % by weight of the ARL.

8. The fuel cell of Claim 6, wherein the Ni and Ru doped ceria catalyst includes an oxygen vacancy near one of the Ni or Ru dopants dispersed as ions on the surface of the ceria.

9. The fuel cell of Claim 1, wherein grain boundaries between the oxygen ion transporting SOFC electrolyte material and the proton transporting SOFC electrolyte material are substantially vertical.

10. The fuel cell of Claim 6, herein the hollow oxide nanofibers have an average outer diameter between 200 nm and 400 nm and an average inner diameter between 50 nm and 150 nm; and/or
the hollow oxide nanofibers comprise one or more materials selected from the group consisting of PrBa_{0.5}Sr_{0.5}Co_{1.5}Fe_{0.5}O_{5+δ}, La_{0.6}Sr_{0.4}Co_{0.2}Fe_{0.8}O₃, PrBa_{0.5}Sr_{0.5}Co₂O₆, and Sm_{0.5}Sr_{0.5}CoO₃.

11. The fuel cell of Claim 10 further comprising nanoparticles residing on an outer surface of the hollow oxide nanofibers.

12. The fuel cell of Claim 11, wherein the nanoparticles comprise one or more materials selected from the group consisting of PrOₓ, samaria-doped ceria (SDC), gadolinia-doped ceria (GDC), and Pr_{0.1}Ce_{0.9}O₂, Pr₂Ni_{0.5}Mn_{0.5}O₄.

13. The fuel cell of claim 1, wherein the fuel cell is configured to directly utilize hydrocarbon fuel while operating with a current density of at least 200 mA/cm² and an open circuit voltage of 0.75 V at temperatures of 500°C or less for two hours or more without deactivation.

14. The fuel cell of Claim 1, wherein the fuel cell is configured to directly utilize hydrocarbon fuel and yield a peak power density of 0.368 W/cm² at temperatures of 500°C or less and/or the doped ceria catalyst is active for wet and dry reforming of methane.

## Patentansprüche

1. Brennstoffzelle, die dazu konfiguriert ist, Kohlenwasserstoff-Brennstoff bei Temperaturen von 500 °C oder weniger direkt zu nutzen, umfassend:
eine Schichtanode, umfassend einen mit Ni und Ru dotierten Ceroxid-Katalysator, wobei die Anode zur Nass- und Trockenreformierung des Kohlenwasserstoff-Brennstoffs unter 500 °C wirksam ist;
eine mischionenleitende Membran-Elektrolyt-Struktur, umfassend abwechselnde Schichten aus:
ein sauerstoffionentransportierendes Festoxid-Brennstoffzellen-Elektrolytmaterial (SOFC-Elektrolytmaterial), umfassend mit Samarium(III)-oxid dotiertes Ceroxid; und
ein protonentransportierendes SOFC-Elektrolytmaterial, umfassend Barium-Yttrium-Zirkonat; und
eine Kathode, die dazu konfiguriert ist, Sauerstoff zum Transport durch das sauerstoffionentransportierende SOFC-Elektrolytmaterial zu der Schichtanode zu ionisieren;
wobei das sauerstoffionentransportierende SOFC-Elektrolytmaterial dazu konfiguriert ist, den ionisierten Sauerstoff dort hindurch von der Kathode zu der Schichtanode zu transportieren;
wobei das protonentransportierende SOFC-Elektrolytmaterial dazu konfiguriert ist, Wasserstoff ionisiert dort hindurch von der Schichtanode zu der Kathode zu transportieren; und
wobei das Verhältnis des sauerstoffionentransportierenden SOFC-Elektrolytmaterial zu dem protonentransportierenden SOFC-Elektrolytmaterial ungefähr 1:10 beträgt.

2. Brennstoffzelle nach Anspruch 1, wobei die Schichtanode umfasst:
eine Anodenfunktionsschicht (AFS);
eine Anodenträgerschicht (ATS) und
eine Anodenreformierungsschicht (ARS).

3. Brennstoffzelle nach Anspruch 2, wobei die AFS- und die ATS-Schicht Material auf Ni-Basis umfassen.

4. Brennstoffzelle nach Anspruch 2 oder 3, wobei die ARS-Schicht den dotierten Ceroxid-Katalysator umfasst oder
wobei die ATS-Schicht mit Samarium(III)-oxid dotiertem Ceroxid (SDC) imprägniert ist.

5. Brennstoffzelle nach einem der Ansprüche 2 bis 4, wobei die AFS- und die ATS-Schicht eine Porenstruktur aufweisen und
wobei die AFS-Schicht eine feinere Porenstruktur als die ATS-Schicht aufweist.

6. Brennstoffzelle nach Anspruch 1, wobei die Kathode hohle Oxid-Nanofasern umfasst.

7. Brennstoffzelle nach Anspruch 2, wobei die Summe von Ni und Ru, bezogen auf das Gewicht, ungefähr 10 % oder weniger ist und/oder
wobei Ni zu ungefähr 5 Gew.-% der ARS vorliegt und/oder
wobei Ru zu ungefähr 5 Gew.-% der ARS vorliegt.

8. Brennstoffzelle nach Anspruch 6, wobei der mit Ni und Ru dotierte Ceroxid-Katalysator eine Sauerstoffvakanz in der Nähe von einem der Ni- oder Ru-Dotierstoffe, die als Ionen auf der Oberfläche des Ceroxids verteilt sind, beinhaltet.

9. Brennstoffzelle nach Anspruch 1, wobei Korngrenzen zwischen dem sauerstoffionentransportierenden SOFC-Elektrolytmaterial und dem protonentransportierenden SOFC-Elektrolytmaterial im Wesentlichen vertikal sind.

10. Brennstoffzelle nach Anspruch 6, wobei die hohlen Oxid-Nanofasern einen durchschnittlichen Außendurchmesser zwischen 200 nm und 400 nm und einen durchschnittlichen Innendurchmesser zwischen 50 nm und 150 nm aufweisen und/oder
die hohlen Oxid-Nanofasern ein oder mehrere Materialien umfassen, die aus der Gruppe bestehend aus PrBa_{0,5}Sr_{0,5}Co_{1,5}Fe_{0,5}O_{5+δ}, La_{0,6}Sr_{0,4}Co_{0,2}Fe_{0,8}O₃, PrBa_{0,5}Sr_{0,5}Co₂O₆ und Sm_{0,5}Sr_{0,5}CoO₃ ausgewählt sind.

11. Brennstoffzelle nach Anspruch 10, weiterhin umfassend Nanoteilchen, die sich auf einer äußeren Oberfläche der hohlen Oxid-Nanofasern befinden.

12. Brennstoffzelle nach Anspruch 11, wobei die Nanoteilchen ein oder mehrere Materialien umfassen, die aus der Gruppe bestehend aus PrOₓ, mit Samarium(III)-oxid dotiertem Ceroxid (SDC), mit Gadolinium(III)-oxid dotiertem Ceroxid (GDC) und Pr_{0,1}Ce_{0,9}O₂, Pr₂Ni_{0,5}Mn_{0,5}O₄ ausgewählt sind.

13. Brennstoffzelle nach Anspruch 1, wobei die Brennstoffzelle dazu konfiguriert ist, Kohlenwasserstoff-Brennstoff direkt zu nutzen, während sie mit einer Stromdichte von mindestens 200 mA/cm² und einer Leerlaufspannung von 0,75 V bei Temperaturen von 500 °C oder weniger für zwei Stunden oder mehr ohne Deaktivierung arbeitet.

14. Brennstoffzelle nach Anspruch 1, wobei die Brennstoffzelle dazu konfiguriert ist, Kohlenwasserstoff-Brennstoff direkt zu nutzen und eine Spitzenleistungsdichte von 0,368 W/cm² bei Temperaturen von 500 °C oder weniger zu ergeben, und/oder der dotierte Ceroxid-Katalysator zur Nass- und Trockenreformierung von Methan wirksam ist.

## Revendications

1. Pile à combustible conçue pour utiliser directement du combustible hydrocarboné à des températures inférieures ou égales à 500 °C comprenant :
une anode en couches comprenant un catalyseur en oxyde de cérium dopé par Ni et Ru, l'anode étant active pour le reformage du combustible hydrocarboné par voie humide et à sec au-dessous de 500 °C ;
une structure électrolytique membranaire conductrice d'ions mélangés comprenant des couches alternées de :
un matériau électrolytique de pile à combustible à oxyde solide (SOFC) transporteur d'ions oxygène comprenant de l'oxyde de cérium dopé par de l'oxyde de samarium ; et
un matériau électrolytique de SOFC transporteur de protons comprenant du zirconate de baryum et d'yttrium ; et
une cathode conçue pour ioniser de l'oxygène destiné à être transporté dans le matériau électrolytique de SOFC transporteur d'ions oxygène vers l'anode en couches ;
dans laquelle le matériau électrolytique de SOFC transporteur d'ions oxygène est conçu pour y transporter l'oxygène ionisé de la cathode vers l'anode en couches ;
dans laquelle le matériau électrolytique de SOFC transporteur de protons est conçu pour y transporter de l'hydrogène ionisé de l'anode en couches vers la cathode ; et
dans laquelle le rapport du matériau électrolytique de SOFC transporteur d'ions oxygène au matériau électrolytique de SOFC transporteur de protons est d'environ 1:10.

2. Pile à combustible selon la revendication 1, dans laquelle l'anode en couches comprend :
une couche fonctionnelle anodique (AFL) ;
une couche de support anodique (ASL) ; et
une couche de reformage anodique (ARL).

3. Pile à combustible selon la revendication 2, dans laquelle les couches d'AFL et d'ASL comprennent du matériau à base de Ni.

4. Pile à combustible selon les revendications 2 ou 3, dans laquelle la couche d'ARL comprend le catalyseur en oxyde de cérium dopé ; ou
dans laquelle la couche d'ASL est imprégnée d'oxyde de cérium dopé par de l'oxyde de samarium (SDC).

5. Pile à combustible selon l'une quelconque des revendications 2 à 4, dans laquelle les couches d'AFL et d'ASL ont une structure poreuse ; et
dans laquelle la couche d'AFL a une structure poreuse plus fine que celle de la couche d'ASL.

6. Pile à combustible selon la revendication 1, dans laquelle la cathode comprend des nanofibres d'oxyde creuses.

7. Pile à combustible selon la revendication 2, dans laquelle la somme de Ni et Ru en poids est inférieure ou égale à environ 10 % ; et/ou
dans laquelle Ni est présent à hauteur d'environ 5 % en poids de l'ARL ; et/ou
dans laquelle Ru est présent à hauteur d'environ 5 % en poids de l'ARL.

8. Pile à combustible selon la revendication 6, dans laquelle le catalyseur en oxyde de cérium dopé par Ni et Ru comporte une lacune d'oxygène près de l'un des dopants Ni ou Ru dispersés sous forme d'ions sur la surface de l'oxyde de cérium.

9. Pile à combustible selon la revendication 1, dans laquelle les joints de grains entre le matériau électrolytique de SOFC transporteur d'ions oxygène et le matériau électrolytique de SOFC transporteur de protons sont pratiquement verticaux.

10. Pile à combustible selon la revendication 6, dans laquelle les nanofibres d'oxyde creuses ont un diamètre extérieur moyen compris entre 200 nm et 400 nm et un diamètre intérieur moyen compris entre 50 nm et 150 nm ; et/ou
les nanofibres d'oxyde creuses comprennent un ou plusieurs matériaux choisis dans le groupe constitué par PrBa_{0,5}Sr_{0,5}Co_{1,5}Fe_{0,5}O_{5+δ}, La_{0,6}Sr_{0,4}Co_{0,2}Fe_{0,8}O₃, PrBa_{0,5}Sr_{0,5}Co₂O₆ et Sm_{0,5}Sr_{0,5}CoO₃.

11. Pile à combustible selon la revendication 10 comprenant en outre des nanoparticules situées sur une surface extérieure des nanofibres d'oxyde creuses.

12. Pile à combustible selon la revendication 11, dans laquelle les nanoparticules comprennent un ou plusieurs matériaux choisis dans le groupe constitué par PrOₓ, l'oxyde de cérium dopé par de l'oxyde de samarium (SDC), l'oxyde de cérium dopé par de l'oxyde de gadolinium (GDC) et Pr_{0,1}Ce_{0,9}O₂, Pr₂Ni_{0,5}Mn_{0,5}O₄.

13. Pile à combustible selon la revendication 1, la pile à combustible étant conçue pour utiliser directement du combustible hydrocarboné tout en fonctionnant avec une densité de courant d'au moins 200 mA/cm² et une tension en circuit ouvert de 0,75 V à des températures inférieures ou égales à 500 °C pendant deux heures ou plus sans désactivation.

14. Pile à combustible selon la revendication 1, la pile à combustible étant conçue pour utiliser directement du combustible hydrocarboné et produire une densité de puissance de crête de 0,368 W/cm² à des températures inférieures ou égales à 500 °C et/ou le catalyseur en oxyde de cérium dopé étant actif pour le reformage de méthane par voie humide et à sec.
